# EUROPÄISCHE PATENTSCHRIFT

(11) **EP 2 781 290 B1**
(45) Veröffentlichungstag und Bekanntmachung des Hinweises auf die Patenterteilung: **13.03.2019**
(21) Anmeldenummer: 14160419.9
(22) Anmeldetag: 18.03.2014
(51) Int. Cl.: F16F 15/14, F16F 15/131

(54) **Drehmomentübertragungseinrichtung mit Fliehkraftpendel**
Torque transmission device with centrifugal force pendulum
Dispositif de transmission de couple doté de pendule centrifuge

(30) Priorität: 19.03.2013 DE 102013204748
(43) Veröffentlichungstag der Anmeldung: 24.09.2014
(73) Patentinhaber: Schaeffler Technologies AG & Co. KG, 91074 Herzogenaurach (DE)
(72) Erfinder: Junker, Uli, 77652 Offenburg (DE); Hagmayer, Achim, 77830 Bühlertal (DE); Fender-Oberle, Vincent, 67150 Erstein-Krafft (FR)

(56) Entgegenhaltungen:
- EP-A2- 1 746 305
- DE-A1- 10 005 547
- DE-A1-102011 105 009
- GB-A- 2 279 724

## Beschreibung

Die Erfindung betrifft eine um eine Drehachse zwischen einer Brennkraftmaschine und einem Getriebe eines Kraftfahrzeugs angeordnete Drehmomentübertragungseinrichtung mit einem an einem Scheibenteil aufgenommenen Fliehkraftpendel enthaltend ein Flanschteil und mehreren, über den Umfang verteilt an diesem begrenzt verschwenkbar aufgenommenen Pendelmassen.

Drehmomentübertragungseinrichtungen zwischen einer Brennkraftmaschine und einem Getriebe eines Kraftfahrzeugs dienen zum Einen der Schwingungsisolation von Drehschwingungen der Brennkraftmaschine und zum Anderen der Trennung der Brennkraftmaschine von dem Getriebe, beispielsweise eine oder im Falle eines Doppelkupplungsgetriebes zwei Reibungskupplungen. Zur Schwingungsisolation können Drehschwingungsdämpfer in Form von geteilten Schwungrädern, Torsionsschwingungsdämpfern in Kupplungsscheiben von Reibungskupplungen der Drehmomentübertragungseinrichtung für sich oder einzeln vorgesehen sein. Weiterhin können in einer Drehmomentübertragungseinrichtung separat oder in Ergänzung zu einem Drehschwingungsdämpfer drehzahladaptive Schwingungstilger in Form von Fliehkraftpendeln vorgesehen sein. Diese sind bevorzugt in eine Baugruppe der Drehmomentübertragungseinrichtung integriert. Aus der DE 10 2011 085 865 A1 ist beispielsweise ein Fliehkraftpendel in eine Reibungskupplung integriert. Aus der DE 10 2009 052 978 A1 ist eine Drehmomentübertragungseinrichtung bekannt, bei der das Fliehkraftpendel radial innerhalb von Bogenfedern eines geteilten Schwungrads integriert ist. Eine Drehmomentübertragungseinrichtung mit einem parallel zu den Bogenfedern eines Drehschwingungsdämpfers angeordneten Fliehkraftpendel zeigt beispielsweise die DE 10 2009 042 825 A1. Diese Ausführungen benötigen einen hohen axialen Bauraum oder die Pendelmassen sind auf kleinem Durchmesser angeordnet, so dass die Wirkung der Pendelmassen eingeschränkt ist. Des Weiteren ist eine direkte Anbindung radial innen über Bauteile aus Blech vorgesehen, eine Anbindung an Bauteile, beispielsweise Gussteile, die nicht unmittelbar miteinander verschweißbar sind, ist nicht vorgesehen.

In den Druckschriften DE 10 2011 105009 A1 und DE 100 05 547 A1 sind weitere Ausführungsformen von solchen Vorrichtungen gezeigt.

Aufgabe der Erfindung ist daher, eine Drehmomentübertragungseinrichtung zur Anbindung an nicht unmittelbar verschweißbare Bauteile vorzuschlagen.

Die Aufgabe wird durch den Gegenstand des Anspruchs 1 gelöst. Die von diesem abhängigen Unteransprüche geben vorteilhafte Ausführungsformen des Gegenstands des Anspruchs 1 wieder.

Die vorgeschlagene Drehmomentübertragungseinrichtung ist um eine Drehachse zwischen einer Brennkraftmaschine und einem Getriebe eines Kraftfahrzeugs verdrehbar angeordnet und kann im einfachsten Fall ein Fliehkraftpendel und ein dieses aufnehmendes Scheibenteil, welches beispielsweise auf einer Getriebeeingangswelle eines Getriebes verdrehbar und axial fest oder schwimmend gelagert sein kann, mit einem Ausgangsteil beispielsweise mit einer darauf montierten Kupplungsdruckplatte enthalten. Weiterhin kann in der Drehmomentübertragungseinrichtung ein Drehschwingungsdämpfer vorgesehen sein, wobei in bevorzugter Weise das Fliehkraftpendel dem Drehschwingungsdämpfer nachgeschaltet ist. Der Drehschwingungsdämpfer kann ein geteiltes Schwungrad sein. Das Fliehkraftpendel kann radial außerhalb von Energiespeichern wie beispielsweise Bogenfedern angeordnet sein und diese zumindest teilweise axial übergreifen beziehungsweise überschneiden. Das Fliehkraftpendel enthält ein am Scheibenteil aufgenommenes Flanschteil, an dem wiederum mehrere, über den Umfang verteilte und begrenzt verschwenkbare Pendelmassen aufgenommen sind. Axial gegenüberliegende Pendelmassen können mittels Ausnehmungen des Flanschteils durchgreifenden Befestigungsmitteln miteinander zu jeweils einem Pendelmassenpaar verbunden sein. Die Lagerung der Pendelmassen erfolgt bevorzugt mittels auf Laufbahnen der Pendelmasse und des Flanschteils abwälzenden Wälzkörpern wie beispielsweise Laufrollen. Das Flanschteil ist radial zumindest einen Teil der Pendelmassen übergreifend mittels eines axial erweiterten Ansatzes mit einem Außenumfangsbereich des an einem Innenumfang gelagerten Scheibenteils drehfest verbunden. Hierdurch kann das Fliehkraftpendel ohne Erweiterung nach radial innen direkt an dem Scheibenteil aufgenommen werden. Hierdurch ist direkte Zentrierung des Fliehkraftpendels an dem Scheibenteil möglich. Des Weiteren kann die Verbindung des radial außerhalb von gegebenenfalls vorhandenen Energiespeichern wie Bogenfedern eines Drehschwingungsdämpfers direkt radial außen am Scheibenteil vorgenommen werden, so dass axialer Bauraum eingespart und eine kurze und steife Verbindung zum Scheibenteil vorgeschlagen werden kann.

Die Verbindung des Flanschteils mit dem Scheibenteil mittels des axialen Ansatzes kann unabhängig vom Material des Scheibenteils erfolgen. Beispielsweise kann das Scheibenteil aus Stahl, beispielsweise einem Schmiedeteil hergestellt sein. In besonders vorteilhafter Weise lassen sich mittels einer entsprechenden Verbindung Fliehkraftpendel mit nicht schweißbaren Materialien, beispielsweise Guss wie Grauguss oder andere Gussarten, die sich durch eine gute Wärmeleitfähigkeit insbesondere bei Verwendung des Scheibenteils als Gegendruckplatte einer Reibungskupplung auszeichnen, verbinden.

Gemäß einer vorteilhaften Ausführungsform kann an dem aus Stahl oder Guss hergestellten Scheibenteil ein Winkelring mit dem axialen Ansatz, also einem topfförmigen, beispielsweise ausgestanzten und entsprechend umgeformten oder aus Stangenmaterial gerollten und verschweißten Blechteil angeordnet und das Flanschteil an dessen Außenumfang mit dem axialen Ansatz fest verbunden sein. Der im Querschnitt im Wesentliche rechtwinklige Winkelring wird mit seinem radialen Schenkel mit dem Außenumfangsbereich des Scheibenteils verbunden, beispielsweise mit einem aus Guss hergestellten Scheibenteil mit diesem vernietet oder bei einem aus schweißbarem Material bestehenden Scheibenteil verschweißt. Hierbei öffnet sich der axiale Ansatz von dem Scheibenteil weg. In bevorzugter Weise übergreift der axiale Ansatz die Pendelmassen auf beiden Seiten des Flanschteiles, so dass der axiale Ansatz zugleich als Berstschutz dienen kann. Der axiale Ansatz kann mit dem an sich bevorzugt ringförmig ausgebildeten Flanschteil verschweißt wie durchgeschweißt sein, wobei der axiale Ansatz das Flanschteil übergreift und einen axialen Anschlag für dieses ausbilden kann. Alternativ kann das Flanschteil in den axialen Ansatz eingepresst oder eingelegt und anschließend verstemmt werden, indem beispielsweise an der Stirnseite des axialen Ansatzes eine umlaufende Verstemmung oder über den Umfang verteilt mehrere Verstemmungsbereiche vorgesehen werden.

Gemäß einer weiteren vorteilhaften Ausführungsform können insbesondere zur Einsparung von Bauteilen der axiale Ansatz und das Flanschteil einteilig ausgebildet sein. Hierbei wird das Fliehkraftpendel mit dem axialen Ansatz als Baugruppe hergestellt und der axiale Ansatz anschließend an dem Scheibenteil zentriert und mit diesem verbunden. Bei einem Scheibenteil aus Stahl oder Guss kann die Verbindung erfolgen, indem an dem axialen Ansatz über den Umfang verteilt angeordnete Einformbereiche vorgesehen sind. An dem Außenumfang des Scheibenteils sind hierzu komplementäre, radial nach innen erweiterte Ausnehmungen, beispielsweise Blattfedertaschen zur Befestigung von eine Anpressplatte aufnehmenden Blattfedern vorgesehen, in die bei der Verbindung von axialem Ansatz und Scheibenteil die Einformungsbereiche unter Bildung einer formschlüssigen Verbindung zumindest partiell eingeformt werden. Alternativ kann das Scheibenteil am Außenumfang über den Umfang verteilte Öffnungen, beispielsweise Bohrungen aufweisen, an denen das den Außenumfang des Scheibenteils übergreifende Flanschteil mittels Stiften verstiftet wird.

Zur weiteren vorteilhaften Verbindung eines aus Guss hergestellten Scheibenteils mit dem einteilig aus dem Flanschteil gebildeten oder mit diesem verbundenen axialen Ansatz kann in dem Scheibenteil ein Stahlring eingegossen sein und der axiale Ansatz mit dem Stahlring verschweißt sein. Hierbei kann der eingegossene Stahlring an der dem Fliehkraftpendel zugewandten Seite eine Kontaktfläche zu dem axialen Ansatz ausbilden, so dass Ansatz und Stahlring miteinander mittels einer diese verbindenden Standard-Schweißnaht umlaufend oder über den Umfang verteilte Schweißbereiche oder-punkte verschweißt werden können. Alternativ kann der Stahlring radial außen am Scheibenteil vorgesehen sein und durch den axialen Ansatz geschweißt werden. In einer weiteren Ausführungsform kann in eine Ringnut am Außenumfang des Scheibenteils ein Stahldraht einrolliert werden und der axiale Ansatz mit diesem mittels Durchschweißen verbunden werden.

Die Erfindung wird anhand der in den Figuren 1 bis 7 dargestellten Ausführungsformen einer Drehmomentübertragungseinrichtung näher erläutert. Dabei zeigen:
- Figur 1: den oberen Teil einer um eine Drehachse verlagerbaren Drehmomentübertragungseinrichtung im Schnitt,
- Figur 2: ein gegenüber der Drehmomentübertragungseinrichtung der Figur 1 abgeändertes Detail,
- Figur 3: eine Drehmomentübertragungseinrichtung mit gegenüber der Drehmomentübertragungseinrichtung der Figur 1 geänderten Verbindung zwischen Fliehkraftpendel und Scheibenteil,
- Figur 4: ein gegenüber der Drehmomentübertragungseinrichtung der Figur 3 abgeändertes Detail,
- Figur 5: eine Drehmomentübertragungseinrichtung mit gegenüber den Drehmomentübertragungseinrichtungen der Figuren 1 und 3 geänderten Verbindung zwischen Fliehkraftpendel und Scheibenteil,
- Figur 6: ein gegenüber der Drehmomentübertragungseinrichtung der Figur 5 abgeändertes Detail
und
- Figur 7: eine Drehmomentübertragungseinrichtung mit gegenüber den Drehmomentübertragungseinrichtungen der Figuren 1, 3 und 5 geänderten Verbindung zwischen Fliehkraftpendel und Scheibenteil.

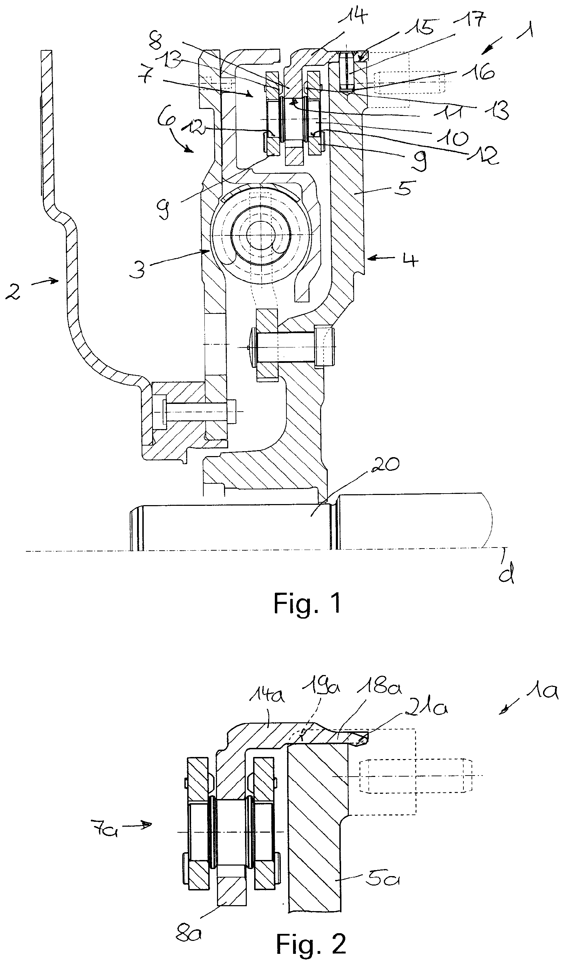

Die Figur 1 zeigt die obere Hälfte der um die Drehachse d verdrehbaren Drehmomentübertragungseinrichtung 1 im Schnitt. Die Drehmomentübertragungseinrichtung 1 enthält das beispielsweise mit einem eine Primärschwungmasse bildenden Schwungrad oder dergleichen verbindbare, in dieser Ausführungsform axial zu den Energiespeichern 3 beabstandete Eingangsteil 2 und das als Ausgangsteil 4 ausgebildete, aus Guss hergestellte und eine Sekundärschwungmasse bildende Scheibenteil 5. Das Scheibenteil 5 ist mittels einer nicht dargestellten Lagerung auf der Getriebeeingangswelle 20 eines Getriebes verdrehbar und gegebenenfalls axial fest gelagert, beispielsweise wälz- oder gleitgelagert. Eingangsteil 2 und Ausgangsteil 4 bilden mit den in Umfangsrichtung wirkenden Energiespeichern 3 den Drehschwingungsdämpfer 6. Radial außerhalb und diese zumindest teilweise axial überlappend ist das Fliehkraftpendel 7 angeordnet. Das Fliehkraftpendel 7 ist aus dem Flanschteil 8 gebildet, an dem paarweise axial gegenüberliegende Pendelmassen 9 zu Pendelmassenpaaren begrenzt verschwenkbar angeordnet sind. Die Pendelmassen 9 beziehungsweise die aus diesen gebildeten Pendelmassenpaare sind mittels Wälzkörpern 10, die auf den an Ausschnitten vorgesehenen Laufbahnen 11, 12 des Flanschteils 8 beziehungsweise der Pendelmassen 9 abwälzen, gegenüber dem Flanschteil 8 verschwenkbar aufgenommen. Die Pendelmassen 9 weisen zum Flanschteil 8 Abstandshalter 13 auf. Das Flanschteil 9 weist in dem gezeigten Ausführungsbeispiel den einteilig angeformten axialen Ansatz 14 auf, der auf dem Außenumfang 15 des Scheibenteils 5 zentriert und mit diesem fest verbunden ist. Hierzu sind am Außenumfang 15 des Scheibenteils 5 über den Umfang verteilt radial nach innen gerichtete Öffnungen 16 wie Bohrungen vorgesehen, in die die Stifte 17 eingebracht sind, die den axialen Ansatz 14 durchgreifen und diesen radial außen am Scheibenteil 5 gegen Verdrehung und axiale Verlagerung fixieren.

Die Figur 2 zeigt im Detail die der Drehmomentübertragungseinrichtung 1 der Figur 1 ansonsten ähnliche Drehmomentübertragungseinrichtung 1a mit dem Fliehkraftpendel 7a mit einer zu der Befestigung des axialen Ansatzes 14 auf dem Scheibenteil 5 der Figur 1 abweichenden Lösung. Hier weist der axiale Ansatz 14a des Flanschteils 8a Einformungen 18a auf, die in gestrichelt angedeutete radiale und über den Umfang verteilte Ausnehmungen 19a, beispielsweise Ausschnitte im Bereich von Blattfedertaschen eingeformt sind, so dass nach radialer Zentrierung eine Verdrehsicherung und mittels der Anprägungen 21a eine axiale Festigkeit gegenüber dem Scheibenteil 5a erzielt wird.

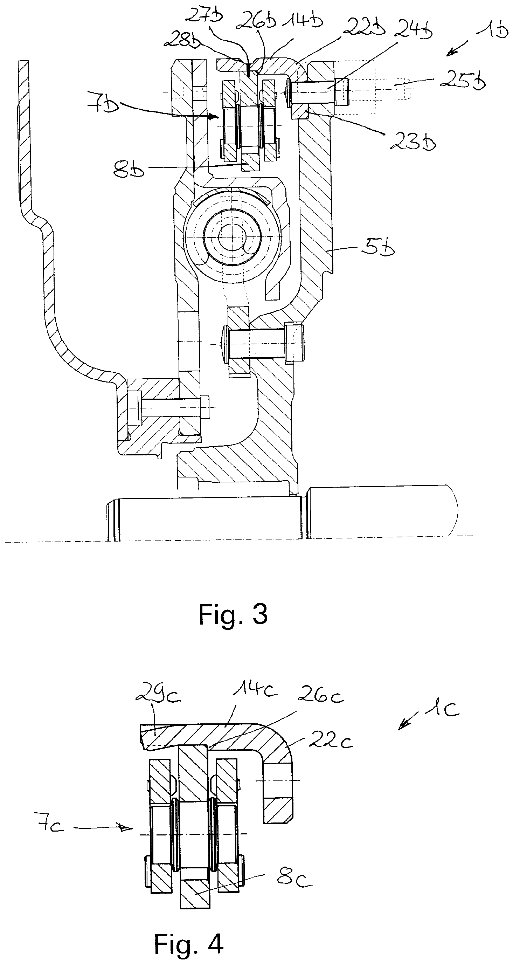

Die Figur 3 zeigt die in Darstellung und Ausbildung der Drehmomentübertragungseinrichtung 1 der Figur 1 ähnliche Drehmomentübertragungseinrichtung 1b. Im Unterschied zu dieser sind der axiale Ansatz 14b und das Flanschteil 8b des Fliehkraftpendels 7b zweiteilig ausgebildet. Hierbei ist das Scheibenteil 5b bereits vorab mit dem Winkelring 22b mittels dessen radialem Schenkel 23b zentriert und fest verbunden, hier mittels der Niete 24b. Die Niete 24b können auf demselben Lochkreis wie die Stifte 25b zur Aufnahme einer Kupplungsdruckplatte vorgesehen sein und sich mit diesen über den Umfang abwechseln. Das Flanschteil 8b ist an den axialen Anschlag 26b und radial außen zentriert an dem axialen Ansatz 14b angelegt und mittels der Schweißverbindung 27b, die an der Schweißstelle 28b mit verminderter Materialstärke als Durchschweißung ausgebildet ist, befestigt.

Die Figur 4 zeigt im Detail die ansonsten der Drehmomentübertragungseinrichtung 1b der Figur 3 entsprechende Drehmomentübertragungseinrichtung 1c mit einer gegenüber der Befestigung des Fliehkraftpendels 7b an dem Scheibenteil 5b abgeänderten Lösung. Hierbei ist der Winkelring 22c mit dem axialen Ansatz 14c vorgesehen, an dessen Anschlag 26c das Flanschteil 8c des Fliehkraftpendels 7c axial angelegt und radial außen zentriert aufgenommen ist. Die Verdrehsicherung und axiale Festigkeit des Flanschteils 8c gegenüber dem Winkelring 22c und damit gegenüber dem nicht dargestellten Scheibenteil erfolgt mittels der Verstemmung 29c, die umlaufend oder aus über den Umfang verteilten Verstemmungsbereichen gebildet sein kann.

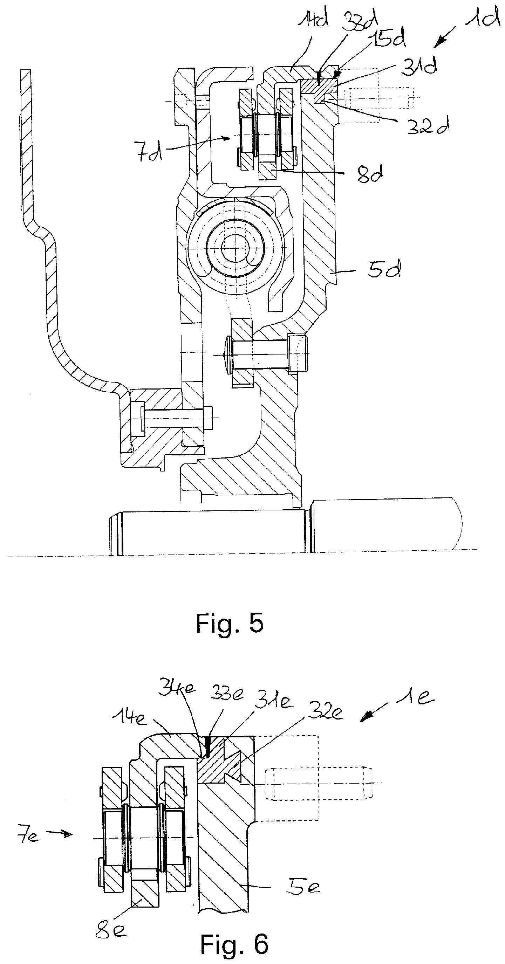

Die Figur 5 zeigt die den Drehmomentübertragungseinrichtungen 1, 1a, 1c in Darstellung und Ausbildung ähnliche Drehmomentübertragungseinrichtung 1d mit einem Scheibenteil 5d aus Guss. Zur stoffschlüssigen Anbindung des mit dem Flanschteil 8d des Fliehkraftpendels 7d einteiligen axialen Ansatzes 14d ist an dem Außenumfang 15d der Stahlring 31d eingeschmolzen. Zur besseren axialen Belastbarkeit der Verbindung zwischen Stahlring 31d und Scheibenteil 5d ist die Nutverbindung 32d vorgesehen. Der axiale Ansatz 14d ist auf dem Stahlring 31d radial außen zentriert und mittels der radial außen angeordneten, als Durchschweißung vorgesehenen Schweißverbindung 33d fest verbunden.

Figur 6 zeigt im Detail die gegenüber der Drehmomentübertragungseinrichtung 1d leicht abgeänderte Drehmomentübertragungseinrichtung 1e. In dieser Drehmomentübertragungseinrichtung 1e ist das Scheibenteil 5e mit dem axial seitlich aufgeschmolzenen und mittels der Schwalbenschwanzverbindung 32e formschlüssig mit dem Scheibenteil 5e verbundenen Stahlring 31e. Der axiale Ansatz 14e des Flanschteils 8e des Fliehkraftpendels 7e ist an der radialen Anlagefläche 34e des Stahlrings 31e zentriert und mittels der Schweißverbindung 33e axial kalibriert mit dem Scheibenteil 5e verschweißt.

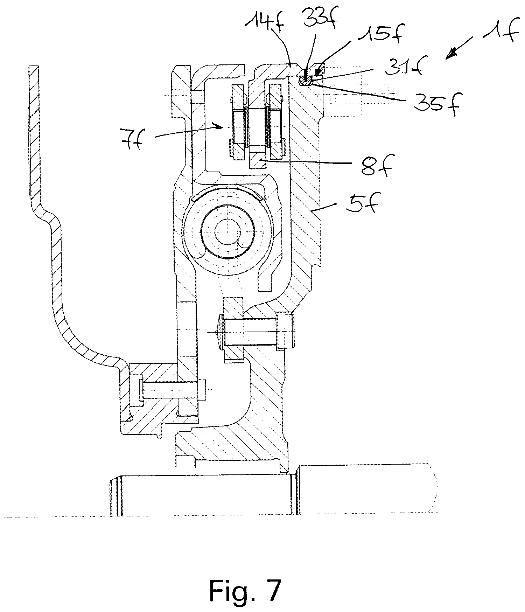

Die Figur 7 zeigt die gegenüber den Drehmomentübertragungseinrichtungen 1d, 1e der Figuren 5 und 6 leicht abgeänderte Drehmomentübertragungseinrichtung 1f. In dieser Drehmomentübertragungseinrichtung 1f ist am Außenumfang 15f die Ringnut 35f eingebracht. In diese ist der Drahtring 31f eingerollt. Mit dem Drahtring 31f ist mittels der der Schweißverbindung 33d der Figur 5 ähnlichen, als Durchschweißung ausgebildeten Schweißverbindung 33f der axiale Ansatz 14f des Flanschteils 8f des Fliehkraftpendels 7f axial und in Umfangsrichtung fest verbunden. Die Zentrierung des axialen Ansatzes 14f erfolgt auf dem Außenumfang 15f des Scheibenteils 5f.

### Bezugszeichenliste

- 1: Drehmomentübertragungseinrichtung
- 1a: Drehmomentübertragungseinrichtung
- 1b: Drehmomentübertragungseinrichtung
- 1c: Drehmomentübertragungseinrichtung
- 1d: Drehmomentübertragungseinrichtung
- 1e: Drehmomentübertragungseinrichtung
- 1f: Drehmomentübertragungseinrichtung
- 2: Eingangsteil
- 3: Energiespeicher
- 4: Ausgangsteil
- 5: Scheibenteil
- 5a: Scheibenteil
- 5b: Scheibenteil
- 5d: Scheibenteil
- 5e: Scheibenteil
- 5f: Scheibenteil
- 6: Drehschwingungsdämpfer
- 7: Fliehkraftpendel
- 7a: Fliehkraftpendel
- 7b: Fliehkraftpendel
- 7c: Fliehkraftpendel
- 7d: Fliehkraftpendel
- 7e: Fliehkraftpendel
- 7f: Fliehkraftpendel
- 8: Flanschteil
- 8a: Flanschteil
- 8b: Flanschteil
- 8c: Flanschteil
- 8d: Flanschteil
- 8e: Flanschteil
- 8f: Flanschteil
- 9: Pendelmasse
- 10: Wälzkörper
- 11: Laufbahn
- 12: Laufbahn
- 13: Abstandshalter
- 14: axialer Ansatz
- 14a: axialer Ansatz
- 14b: axialer Ansatz
- 14c: axialer Ansatz
- 14d: axialer Ansatz
- 14e: axialer Ansatz
- 14f: axialer Ansatz
- 15: Außenumfang
- 15d: Außenumfang
- 15f: Außenumfang
- 16: Öffnung
- 17: Stift
- 18a: Einformung
- 19a: Ausnehmung
- 20: Getriebeeingangswelle
- 21a: Anprägung
- 22b: Winkelring
- 22c: Winkelring
- 23b: radialer Schenkel
- 24b: Niet
- 25b: Stift
- 26b: Anschlag
- 26c: Anschlag
- 27b: Schweißverbindung
- 28b: Schweißstelle
- 29c: Verstemmung
- 31d: Stahlring
- 31e: Stahlring
- 31f: Drahtring
- 32d: Nutverbindung
- 32e: Schwalbenschwanzverbindung
- 33d: Schweißverbindung
- 33e: Schweißverbindung
- 33f: Schweißverbindung
- 34e: Anlagefläche
- 35f: Ringnut
- d: Drehachse

## Patentansprüche

1. Drehmomentübertragungseinrichtung (1, 1a, 1b, 1c, 1d, 1e, 1f) angeordnet um eine Drehachse (d) zwischen einer Brennkraftmaschine und einem Getriebe eines Kraftfahrzeugs mit einem an einem Scheibenteil (5, 5a, 5b, 5d, 5e, 5f) aufgenommenen Fliehkraftpendel (7, 7a, 7b, 7c, 7d, 7e, 7f) enthaltend ein Flanschteil (8, 8a, 8b, 8c, 8d, 8e, 8f) und mehrere, über den Umfang verteilt und gegenüber diesem begrenzt verschwenkbar aufgenommene Pendelmassen (9),
**dadurch gekennzeichnet, dass** das Flanschteil (8, 8a, 8b, 8c, 8d, 8e, 8f) radial zumindest einen Teil der Pendelmassen (9) übergreifend mittels eines axial erweiterten Ansatzes (14, 14a, 14b, 14c, 14d, 14e, 14f) mit einem Außenumfangsbereich des an einem Innenumfang gelagerten Scheibenteils (5, 5a, 5b, 5d, 5e, 5f) drehfest verbunden ist, wobei das Fliehkraftpendel (7, 7a, 7b, 7c, 7d, 7e, 7f) direkt an dem Scheibenteil (5, 5a, 5b, 5d, 5e, 5f) zentriert ist.

2. Drehmomentübertragungseinrichtung (1, 1a, 1b, 1c, 1d, 1e, 1f) nach Anspruch 1, **dadurch gekennzeichnet, dass** das Scheibenteil (5, 5a, 5b, 5d, 5e, 5f) aus Guss gebildet ist.

3. Drehmomentübertragungseinrichtung (1b, 1c) nach einem der Ansprüche 1 oder 2, **dadurch gekennzeichnet, dass** an dem Scheibenteil (5b) ein Winkelring (22b, 22c) mit dem axialen Ansatz (14b, 14c) angeordnet und das Flanschteil (8b, 8c) an dessen Außenumfang mit dem axialen Ansatz (14b, 14c) fest verbunden ist.

4. Drehmomentübertragungseinrichtung (1, 1a, 1d, 1e, 1f) nach Anspruch 1 oder 2, **dadurch gekennzeichnet, dass** der axiale Ansatz (14, 14a, 14d, 14e, 14f) und das Flanschteil (8, 8a, 8d, 8e, 8f) einteilig ausgebildet sind.

5. Drehmomentübertragungseinrichtung (1a) nach Anspruch 4, **dadurch gekennzeichnet, dass** der axiale Ansatz (14a) über den Umfang verteilt angeordnete Einformungen (18a) aufweist, die in radial nach innen am Außenumfang des Scheibenteils (5a) vorgesehene Ausnehmungen (19a) eingeformt sind.

6. Drehmomentübertragungseinrichtung (1) nach Anspruch 4, **dadurch gekennzeichnet, dass** der axiale Ansatz (14) mit dem Außenumfang (15) des Scheibenteils (5) verstiftet ist.

7. Drehmomentübertragungseinrichtung (1d, 1e) nach Anspruch 2, **dadurch gekennzeichnet, dass** in dem Scheibenteil (5d, 5e) ein Stahlring (31d, 31e) eingegossen ist und der axiale Ansatz (14d, 14e) mit dem Stahlring (31d, 31e) verschweißt ist.

8. Drehmomentübertragungseinrichtung (1f) nach Anspruch 2, **dadurch gekennzeichnet, dass** in den Außenumfang (15f) des Scheibenteils (5f) ein Drahtring (31f) einrolliert und der axiale Ansatz (14f) mit dem Drahtring (31f) verschweißt ist.

9. Drehmomentübertragungseinrichtung (1, 1a, 1b, 1c, 1d, 1e, 1f) nach einem der Ansprüche 1 bis 8, **dadurch gekennzeichnet, dass** das Fliehkraftpendel (7, 7a, 7b, 7c, 7d, 7e, 7f) radial außerhalb von Energiespeichern (3) eines Drehschwingungsdämpfers (6) und diesen zumindest teilweise axial übergreifend angeordnet ist.

10. Drehmomentübertragungseinrichtung (1, 1a, 1b, 1c, 1d, 1e, 1f) nach einem der Ansprüche 1 bis 9, **dadurch gekennzeichnet, dass** das Scheibenteil (5, 5a, 5b, 5d, 5e, 5f) auf einer Getriebeeingangswelle (20) verdrehbar gelagert ist.

## Claims

1. Torque transmission device (1, 1a, 1b, 1c, 1d, 1e, 1f) arranged about an axis of rotation (d) between an internal combustion engine and a transmission of a motor vehicle, having a centrifugal force pendulum (7, 7a, 7b, 7c, 7d, 7e, 7f) which is received on a disc part (5, 5a, 5b, 5d, 5e, 5f) and which contains a flange part (8, 8a, 8b, 8c, 8d, 8e, 8f) and a plurality of pendulum masses (9) which are received so as to be distributed over the circumference and pivotable with respect to said flange part to a limited degree, **characterized in that** the flange part (8, 8a, 8b, 8c, 8d, 8e, 8f), while engaging radially at least over a part of the pendulum masses (9), is connected in a rotationally fixed manner by means of an axially extended projection (14, 14a, 14b, 14c, 14d, 14e, 14f) to an outer circumferential region of the disc part (5, 5a, 5b, 5d, 5e, 5f) mounted on an inner circumference, wherein the centrifugal force pendulum (7, 7a, 7b, 7c, 7d, 7e, 7f) is centred directly on the disc part (5, 5a, 5b, 5d, 5e, 5f).

2. Torque transmission device (1, 1a, 1b, 1c, 1d, 1e, 1f) according to Claim 1, **characterized in that** the disc part (5, 5a, 5b, 5d, 5e, 5f) is formed from cast iron.

3. Torque transmission device (1b, 1c) according to either of Claims 1 and 2, **characterized in that** an angular ring (22b, 22c) having the axial projection (14b, 14c) is arranged on the disc part (5b), and the flange part (8b, 8c) is fixedly connected at its outer circumference to the axial projection (14b, 14c).

4. Torque transmission device (1, 1a, 1d, 1e, 1f) according to Claim 1 or 2, **characterized in that** the axial projection (14, 14a, 14d, 14e, 14f) and the flange part (8, 8a, 8d, 8e, 8f) are formed in one piece.

5. Torque transmission device (1a) according to Claim 4, **characterized in that** the axial projection (14a) has formations (18a) which are arranged in a distributed manner over the circumference and which are formed to fit into recesses (19a) provided radially inwards on the outer circumference of the disc part (5a).

6. Torque transmission device (1) according to Claim 4, **characterized in that** the axial projection (14) is pinned to the outer circumference (15) of the disc part (5).

7. Torque transmission device (1d, 1e) according to Claim 2, **characterized in that** a steel ring (31d, 31e) is cast in the disc part (5d, 5e), and the axial projection (14d, 14e) is welded to the steel ring (31d, 31e).

8. Torque transmission device (1f) according to Claim 2, **characterized in that** a wire ring (31f) is rolled into the outer circumference (15f) of the disc part (5f), and the axial projection (14f) is welded to the wire ring (31f).

9. Torque transmission device (1, 1a, 1b, 1c, 1d, 1e, 1f) according to one of Claims 1 to 8, **characterized in that** the centrifugal force pendulum (7, 7a, 7b, 7c, 7d, 7e, 7f) is arranged radially outside of energy accumulators (3) of a rotational vibration damper (6) and so as to engage at least partially axially over the latter.

10. Torque transmission device (1, 1a, 1b, 1c, 1d, 1e, 1f) according to one of Claims 1 to 9, **characterized in that** the disc part (5, 5a, 5b, 5d, 5e, 5f) is rotatably mounted on a transmission input shaft (20) .

## Revendications

1. Dispositif de transfert de couple (1, 1a, 1b, 1c, 1d, 1e, 1f) disposé autour d'un axe de rotation (d) entre un moteur à combustion interne et une transmission d'un véhicule automobile, comprenant un pendule à force centrifuge (7, 7a, 7b, 7c, 7d, 7e, 7f) reçu sur une partie de disque (5, 5a, 5b, 5d, 5e, 5f), contenant une partie de bride (8, 8a, 8b, 8c, 8d, 8e, 8f) et plusieurs masses pendulaires (9) réparties sur la périphérie et reçues de manière à pouvoir pivoter de manière limitée par rapport à celle-ci,
**caractérisé en ce que** la partie de bride (8, 8a, 8b, 8c, 8d, 8e, 8f) est connectée radialement de manière solidaire en rotation à une région périphérique extérieure de la partie de disque (5, 5a, 5b, 5d, 5e, 5f) supportée sur une périphérie intérieure, en venant en prise par le dessus avec au moins une partie des masses pendulaires (9) au moyen d'une pièce élargie axialement (14, 14a, 14b, 14c, 14d, 14e, 14f), le pendule à force centrifuge (7, 7a, 7b, 7c, 7d, 7e, 7f) étant centré directement sur la partie de disque (5, 5a, 5b, 5d, 5e, 5f).

2. Dispositif de transfert de couple (1, 1a, 1b, 1c, 1d, 1e, 1f) selon la revendication 1, **caractérisé en ce que** la partie de disque (5, 5a, 5b, 5d, 5e, 5f) est formée en fonte.

3. Dispositif de transfert de couple (1b, 1c) selon l'une quelconque des revendications 1 ou 2, **caractérisé en ce qu'**une bague coudée (22b, 22c) est disposée avec la pièce axiale (14b, 14c) sur la partie de disque (5b) et la partie de bride (8b, 8c) est connectée fixement au niveau de sa périphérie extérieure à la pièce axiale (14b, 14c) .

4. Dispositif de transfert de couple (1, 1a, 1d, 1e, 1f) selon la revendication 1 ou 2, **caractérisé en ce que** la pièce axiale (14, 14a, 14d, 14e, 14f) et la partie de bride (8, 8a, 8d, 8e, 8f) sont réalisées d'une seule pièce.

5. Dispositif de transfert de couple (1a) selon la revendication 4, **caractérisé en ce que** la pièce axiale (14a) présente des formations (18a) réparties sur la périphérie, qui sont formées dans des évidements (19a) prévus radialement vers l'intérieur sur la périphérie extérieure de la partie de disque (5a).

6. Dispositif de transfert de couple (1) selon la revendication 4, **caractérisé en ce que** la pièce axiale (14) est goupillée à la périphérie extérieure (15) de la partie de disque (5).

7. Dispositif de transfert de couple (1d, 1e) selon la revendication 2, **caractérisé en ce qu'**une bague en acier (31d, 31e) est coulée dans la partie de disque (5d, 5e) et la pièce axiale (14d, 14e) est soudée à la bague en acier (31d, 31e).

8. Dispositif de transfert de couple (1f) selon la revendication 2, **caractérisé en ce qu'**une bague en fil métallique (31f) est enroulée dans la périphérie extérieure (15f) de la partie de disque (5f) et la pièce axiale (14f) est soudée à la bague en fil métallique (31f).

9. Dispositif de transfert de couple (1, 1a, 1b, 1c, 1d, 1e, 1f) selon l'une quelconque des revendications 1 à 8, **caractérisé en ce que** 1e pendule à force centrifuge (7, 7a, 7b, 7c, 7d, 7e, 7f) est disposé radialement à l'extérieur d'accumulateurs d'énergie (3) d'un amortisseur d'oscillations de torsion (6) et vient en prise axialement par-dessus celui-ci au moins en partie.

10. Dispositif de transfert de couple (1, 1a, 1b, 1c, 1d, 1e, 1f) selon l'une quelconque des revendications 1 à 9, **caractérisé en ce que** la partie de disque (5, 5a, 5b, 5d, 5e, 5f) est supportée de manière rotative sur un arbre d'entrée de transmission (20).
